# EUROPÄISCHE PATENTSCHRIFT

(11) **EP 0 857 131 B1**
(45) Veröffentlichungstag und Bekanntmachung des Hinweises auf die Patenterteilung: **04.09.2002**
(21) Anmeldenummer: 96939014.5
(22) Anmeldetag: 12.11.1996
(51) Int. Cl.: B60T 13/74, B60T 8/32, B60T 8/40, B60T 13/68, B60T 8/44

(54) **Bremsanlage mit Hauptbremszylinder und Hydraulikpumpe**
Brake system with master-cylinder and hydraulic pump
Système de freinage avec maitre-cylindre et pompe hydraulique

(30) Priorität: 15.11.1995 DE 19542656
(43) Veröffentlichungstag der Anmeldung: 12.08.1998
(73) Patentinhaber: Lucas Industries Limited, West Midlands B90 4LA (GB)
(72) Erfinder: POERTZGEN, Gregor, D-56068 Koblenz (DE); MOHR, Kurt, D-56283 Halsenbach (DE)
(74) Vertreter: Schmidt, Steffen J., Dipl.-Ing.
(86) Internationale Anmeldenummer: EP9604950
(87) Internationale Veröffentlichungsnummer: WO97018116

(56) Entgegenhaltungen:
- EP-A- 0 618 114
- WO-A-95/19901
- DE-A- 3 431 823
- US-A- 4 625 625
- US-A- 5 249 853
- PATENT ABSTRACTS OF JAPAN vol. 010, no. 196 (M-497), 10.Juli 1986 & JP 61 041654 A (NIPPON DENSO CO LTD), 28.Februar 1986,

## Beschreibung

Die vorliegende Erfindung betrifft eine Bremsanlage mit den im Oberbegriff des Anspruchs 1 genannten Merkmalen.

Eine derartige Bremsanlage ist aus Patent Abstracts of Japan vol. 010, no. 196 (M-497) und JP 61 04 1654 A bekannt. Sie soll eine von der Bremspedalbetätigung durch den Fahrer unabhängige Bremskrafterzeugung ermöglichen. Dies ist für Antischlupfregelungen, Fahrdynamikregelungen, automatische Abstandskontrolle, erforderlich. Üblicherweise wird der Bremsdruck in den einzelnen Radbremsen durch ABS-Systeme moduliert, die in dem/den Bremskreis/en angeordnet sind.

Bei herkömmlichen Fahrzeugbremsanlagen für Kraftfahrzeuge wird die zum Bremsen erforderliche Hilfsenergie durch pneumatische Bremskraftverstärker erzeugt, die mit dem Ansaugstutzen des Motors gekoppelt sind, um einen Unterdruck gegenüber Atmosphärendruck in dem pneumatischen Bremskraftverstärker bereitzustellen. Allerdings ist bei modernen Motoren der unterdruck relativ gering, so daß die erforderliche Hilfsenergie nicht im gewünschten Maß und mit der erforderlichen Dynamik bereitgestellt werden kann.

Daher liegt der eingangs genannten Bremsanlage das Prinzip zugrunde, die zum Bremsen erforderliche Hilfsenergie durch eine steuerbare Druckquelle bereitzustellen. Diese steuerbare Druckquelle kann durch elektrische Energie aktiviert werden.

Die Abkehr von den bisherigen pneumatischen Bremskraftverstärkern und der Einsatz einer steuerbaren Druckquelle, die vorzugsweise durch elektrische Energie aktiviert wird, um gesteuert von einer elektronischen Steuereinheit den Kolben der Zylinder/Kolbenanordnung im Hauptbremszylinder im Sinne einer Zufuhr von Hydraulikfluid zu dem Bremskreis mit Hydraulikfluid zu beaufschlagen, führt zu folgenden Vorteilen.

Im Spritzwandbereich der Fahrgastzelle wird Bauvolumen frei, da die bisherigen großbauenden pneumatischen Bremskraftverstärker nicht mehr vorhanden sind. Des weiteren entfallen Vakuumleitungen zu dem Ansaugstutzen. Außerdem kann eine erheblich höhere Druckdifferenz als bei herkömmlichen Bremskraftverstärkern erzielt werden, wodurch eine erhöhte Dynamik bei gesteuerten und/oder unterstützten Bremsungen erzielbar ist. Schließlich kann die gesteuerte Druckquelle räumlich von der Zylinder/Kolbenanordnung des Hauptbremszylinders getrennt werden. Dies hat positive Auswirkungen auf das Crash-Verhalten.

Aus US-A-5 249 853 ist eine hydraulische Antiblockierbremsanlage bekannt, bei der ein Einstellelement einen Druckminderer bewegt, damit dieser eine Schaltstellung einnimmt, in der er den Servodruck in einem Bremsdruckgenerator begrenzt. Der Servodruck wird von einer Pumpe als Hilfsdruckquelle erzeugt, der ein Druckbegrenzungsventil parallel geschaltet ist. Die gesamte Anordnung mit Einstellelement und Druckminderer ist aufwendig und daher störungsanfällig.

Der Erfindung liegt die Aufgabe zugrunde, eine Bremsanlage der eingangs genannten Art zu vereinfachen

Die Aufgabe ist erfindungsgemäß mit einer Bremsanlage gelöst, die die im Oberbegriff des Anspruchs 1 genannten Merkmale aufweist, und bei der die Hydraulikpumpe dazu eingerichtet ist, Hydraulikfluid nur in eine Richtung zu fördern, und ein durch die elektrische Steuereinheit (ECU) steuerbares Druckablaßventil zwischen der Auslaßseite und der Einlaßseite der Hydraulikpumpe angeordnet ist, wobei in der Druckabbauphase in zumindest einer Stellung des Druckablaßventils Hydraulikfluid von der Auslaßseite zu dem Hydraulikfluidresevoir fließen kann.

Damit die Bremsanlage für den Einsatz einer Antischlupfregelung, einer Fahrdynamikreqelung oder einer Berganfahrregelung geeignet ist, sollte die Druckquelle in eine Druckaufbau-, Druckhalte- und Druckabbaustellung bringbar sein. Die steuerbare Druckquelle kann eine Hydraulikpumpe sein, deren Einlaßseite mit einem Hydraulikfluidreservoir hydraulisch verbunden ist, und deren Auslaßseite mit der in dem Hauptbremszylinder angeordneten Druckkammer hydraulisch verbunden ist, deren Volumenänderung eine Betätigung des Hauptbremszylinders hervorruft. Dies gilt insbesondere für Hydraulikpumpen mit hoher Förderleistung und hoher Pumpdynamik.

Die Hydraulikpumpe ist dazu eingerichtet, Hydraulikfluid in eine Richtung zu fördern, und ein durch die elektrische Steuereinheit steuerbares Druckablaßventil ist zwischen der Auslaßseite und der Einlaßseite der Hydraulikpumpe angeordnet, wobei in zumindest einer Stellung des Druckablaßventils Hydraulikfluid von der Druckauslaßseite zu dem Hvdraulikfluidreservoir bzw. der Einlaßseite fließen kann. HIERDURCH wird grundsätzlich der gleiche Effekt erzielt wie bei einer Hydraulikpumpe, die Hydraulikfluid in zwei Förderrichtungen fördern kann. Allerdings ist die Dynamik der Druckabbauphase geringer.

Bei bevorzugten Ausführungsformen der Bremsanlage gemäß der Erfindung ist eine Drucksensoranordnung vorgesehen, die den auf die Druckkammer des Hauptbremszylinders wirkenden Fluiddruck erfaßt und einen für den momentanen Fluiddruck repräsentatives elektrisches Signal an die elektronische Steuereinheit abgibt. Außerdem ist vorzugsweise eine Sensoranordnung vorgesehen, die eine Betätigung des Bremspedals erfaßt und ein für diese Betätigung repräsentatives Signal an die elektronische Steuereinheit abgibt.

Damit kann die elektronische Steuereinheit in Abhängigkeit von der Betätigung des Bremspedals, aber auch unabhänging davon, eine Betätigung des Hauptbremszylinders bewirken. Dies kann entweder eine Unterstützung der vom Fahrer eingeleiteten Pedalbetätigung sein, oder ein gezielter Eintritt in das Fahrverhalten des Fahrers sein-.

Weitere Merkmale, Eigenschaften und Vorteile der erfindungsgemäßen Anordnung werden anhand der nachstehenden Beschreibung von Bremsanlagen.
- Fig. 1 und 2: zeigen zum Verständnis der Erfindung beitragenden Bremsanlagen.
- Fig. 3: zeigt eine Ausführungsform der Erfindung, bei der eine Hydraulikpumpe als steuerbare Druckquelle verwendet wird, deren Förderrichtung nicht umkehrbar ist und deren Druckeinlaßseite mit der Druckauslaßseite durch ein steuerbares Druckablaßventil verbunden ist,

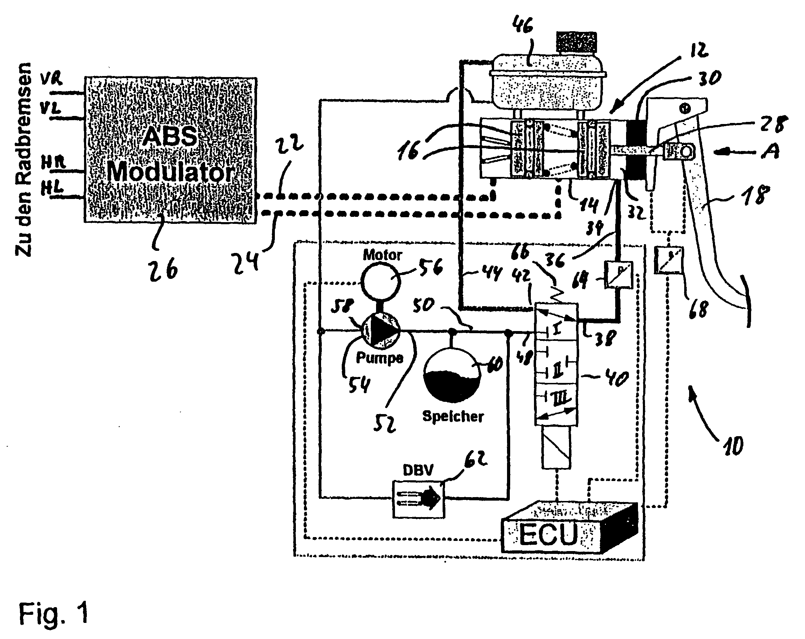

Fig. 1 zeigt einen Teil einer Bremsanlage 10 für Kraftfahrzeuge mit einem Hauptbremszylinder 12, der eine Zylinder/Kolbenanordnung 14, 16 aufweist, die durch ein Bremspedal 18 betätigbar ist, um zwei Bremskreisen 22, 24 Hydraulikfluid zuzuführen. In den Bremskreis 22, 24 ist eine ABS-Modulationseinrichtung 26 eingefügt, um die vier Radbremsen (VR, VL, HR, HL) gesteuert mit Hydraulikfluid zu beaufschlagen. Der Zylinder 14 der zylinder/Kolbenanordnung in dem Hauptbremszylinder 12 ist als Doppelzylinder ausgeführt, um die beiden Bremskreise 22, 24 separat ansteuern zu können.

Der Kolben 16 ist über eine Betätigungsstange 28 mit dem Bremspedal 18 gekoppelt, die in den Zylinder 14 hineinragt. Der Zylinder 14 ist dabei an seinem dem Bremspedal 18 zugewandten Ende fluiddicht durch eine Abdeckung 30 abgedeckt, so daß zwischen dem Kolben 16 und der Abdeckung 30 eine Kammer 32 gebildet ist. Die Kammer 32 ist durch einen Anschluß 34 und über eine Hydraulikleitung 36 mit einem Anschluß 38 eines elektromagnetisch ansteuerbaren 3/2-wegeventils 40 verbunden. Ein weiterer Anschluß 42 des Ventils 40 ist über eine Hydraulikleitung 44 mit einem Hydraulikfluidreservoir 46 verbunden, das auch die Zylinder/Kolbenanordnung 14, 16 des Hauptbremszylinders 12 speist. Ein dritter Anschluß 48 ist über eine Hydraulikleitung 50 einer Auslaßseite 52 mit einer Hydraulikpumpe 54 verbunden.

Die Hydraulikpumpe 54 wird über einen Motor 56 aktiviert, der durch eine elektronische Steuereinheit ECU gesteuert wird. Die elektronische Steuereinheit ECU steuert auch die Betätigung des Ventils 40. Eine Einlaßseite 58 der Hydraulikpumpe 54 ist ebenfalls mit dem Hydraulikfluidreservoir 46 verbunden. Damit wirkt die Hydraulikpumpe 54 als von der elektronischen Steuereinheit ECU steuerbare Druckquelle, die den Kolben 16 der Zylinder/Kolbenanordnung 14, 16 mit Hydraulikfluid beaufschlagt, wenn Hydraulikfluid von der Auslaßseite 52 der Hydraulikpumpe 54 durch die Hydraulikleitung 50, das Ventil 40, die Hydraulikleitung 36 in die Druckkammer 32 gelangt, so daß sich der Kolben 16 in Richtung des Pfeils A bewegt, wenn das Hydraulikfluid das Volumen der Druckkammer 32 vergrößert. Dies hat zur Folge, daß die Bremskreise 22, 24 mit Hydraulikfluid aus dem Hauptbremszylinder gespeist werden, so daß sich der Druck an den Radbremsen VR, VL, HR und/oder HL erhöht.

An der Auslaßseite 52 der Hydraulikpumpe 54 ist ein Druckspeicher 60 angeschlossen. Damit kann eine ggf. nicht ausreichende Dynamik in der Förderleistung der Hydraulikpumpe 54 ausgeglichen werden. Um den Berstdruck des Systems nicht zu überschreiten, ist ein Druckbegrenzungsventil 62 vorgesehen, das die Druckeinlaßseite 58 mit der Auslaßseite 52 der Hydraulikpumpe 54 verbindet.

Das Ventil 40 kann in drei Stellungen gebracht werden. In der ersten (gezeigten) Stellung I ist die Druckkammer 32 mit dem Hydraulikfluidreservior 46 verbunden. Dies entspricht einer Druckabbauphase. In der zweiten Stellung II sind die Druckkammer 32, das Hydraulikfluidreservoir 46 und die Hydraulikpumpe 54 bzw. der Hydraulikspeicher 60 jeweils gegeneinander abgesperrt. Dies entspricht einer Druckhaltephase. In einer dritten Stellung ist die Auslaßseite 52 der Hydraulikpumpe 54 bzw. der Hydraulikspeicher 60 über den Anschluß 48 des Ventils 40 mit dem Anschluß 38 des Ventils 40 verbunden, so daß Hydraulikfluid von dem Druckspeicher 60 bzw. der Hydraulikpumpe 54 in die Druckkammer 32 fließen kann. Dies entspricht einer Druckaufbauphase. Das Ventil 40 ist in seiner (gezeigten) unbetätigten Position in der ersten Stellung I, da ein Federelement 66 das Ventilglied in diese Postition drängt.

In der Hydraulikleitung 36 ist ein Drucksensor 46 angeordnet, der ein für den Druck in der Hydraulikleitung 36 bzw. in der Druckkammer 32 representatives elektrisches Signal an die elektronische Steuereinheit ECU leitet. Des weiteren ist ein Wegsensor 68 mit dem Bremspedal 18 gekoppelt, um ein für die Betätigung des Bremspedals repräsentatives Signal an die elektronische Steuereinheit ECU zu leiten. Anstelle des Wegsensors 68 kann jeder beliebige andere Sensor (Drehwinkelsensor, Kraftsensor, Beschleunigungssensor etc.) verwendet werden.

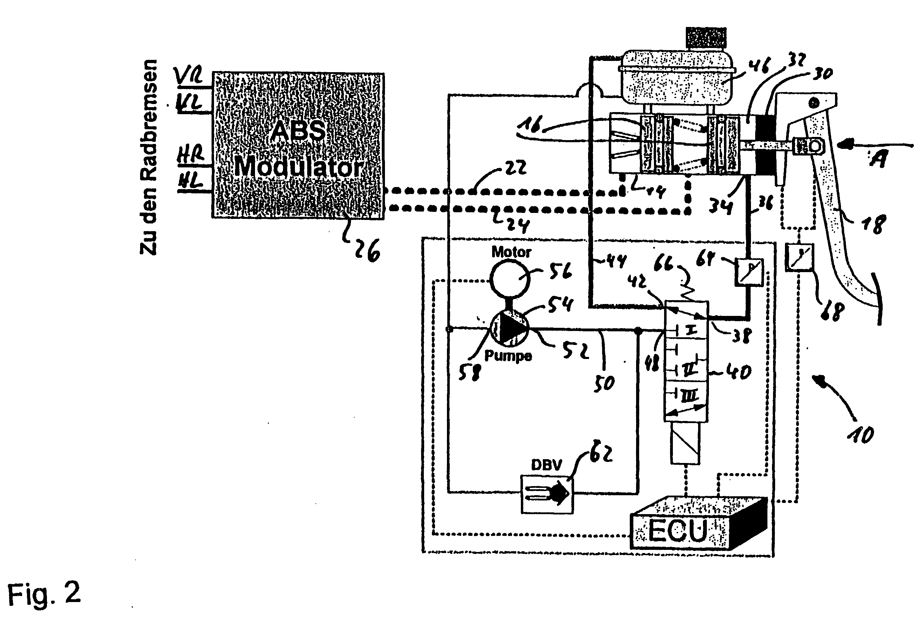

Die in Fig. 2 veranschaulichte Bremsanlage unterscheidet sich von der Bremsanlage gemäß Fig. 1 nur dadurch, daß der Druckspeicher 60 aus Fig. 1 weggelassen ist, da eine Pumpe mit erhöhter Förderleistung und erhöhter Pumpdynamik eingesetzt ist. Damit ist es möglich, den Druckspeicher 60 zu erübrigen, da der insbesondere am Anfang der Druckaufbauphase wirksame Druckspeicher durch die erhöhte Förderleistung der Hydraulikpumpe 54 ersetzt wird. Im übrigen unterscheiden sich die Bremsanlagen gemäß Fig. 1 und Fig. 2 nicht.

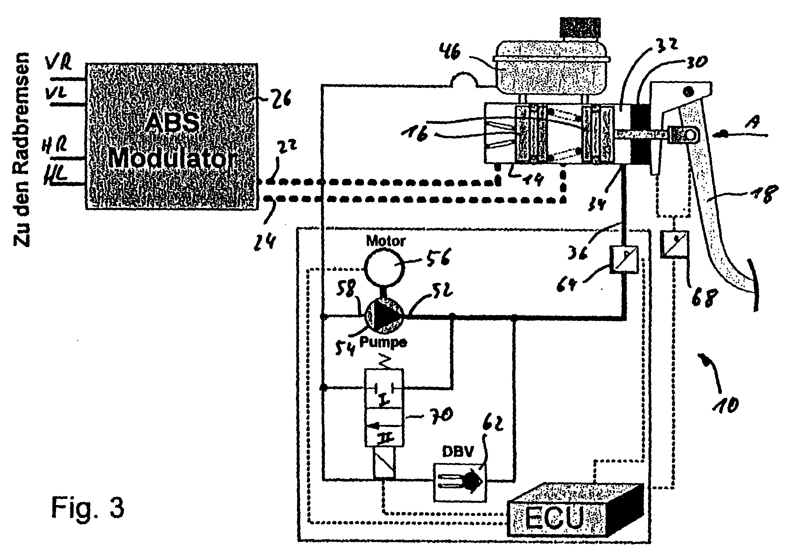

Fig. 3 zeigt die gegenüber den Fig. 1 und 2 insofern vereinfachte Ausführungsform der Erfindung, als das 3/2-Wege-Elektromagnetventil 40 zwischen der Auslaßseite 52 der Hydraulikpumpe 54 und der Druckkammer 32 weggelassen ist. Dies ist möglich, wenn die Hydraulikpumpe 54 dazu eingerichtet ist, ein in der Druckkammer 32 aufgebautes Druckniveau zu halten. Wenn die dafür eingesetzte Pumpe nur eine Förderrichtung hat, ist es notwendig, ein Druckablaßventil 70 vorzusehen, das die Auslaßseite 52 der Hydraulikpumpe 54 mit der Einlaßseite 58 entweder verbindet (Stellung II in Fig. 3) oder die Druckeinlaßseite 58 von der Druckauslaßseite 53 trennt (gezeigte Stellung I in Fig. 3). Im übrigen unterscheiden sich die Bremsamlagen gemäß den Fig. 1, 2 nicht von der Ausführungsform nach Fig. 3.

## Patentansprüche

1. Bremsanlage (10) mit einem Hauptbremszylinder (12) der wenigstens eine Zylinder/Kolbenanordnung (14, 16) aufweist, die durch ein Bremspedal (18) betätigbar ist, um wenigstens einem Bremskreis (22, 24) Hydraulikfluid zuzuführen, mit
- einer steuerbaren Druckquelle, die gesteuert von einer elektronischen Steuereinheit ECU den Kolben (16) der Zylinder/Kolbenanordnung (14, 16) im Sinne einer Zufuhr von Hydraulikfluid zu dem Bremskreis (22, 24) mit Hydraulikfluid beaufschlagt, wobei
- die steuerbare Druckquelle eine Hydraulikpumpe (54) ist, deren Einlaßseite mit einem Hydraulikfluidreservoir hydraulisch verbunden ist, und deren Auslaßseite (52) mit einem Druckspeicher (60) und mit einer in dem Hauptbremszylinder (12) angeordneten Druckkammer (32) hydraulisch verbunden ist, deren Volumenänderung eine Betätigung des Hauptbremszylinders (12) hervorruft, wobei
- die Hydraulikpumpe dazu eingerichtet ist, Hydraulikfluid nur in eine Richtung zu fördern,
**dadurch gekennzeichnet, daß**
- ein durch die elektrische Steuereinheit (ECU) steuerbares Druckablaßventil (70) zwischen der Auslaßseite (52) und der Einlaßseite (58) der Hydraulikpumpe (54) angeordnet ist, wobei in der Druckabbauphase in zumindest einer Stellung des Druckablaßventils (70) Hydraulikfluid von der Auslaßseite (52) zu dem Hydraulikfluidreservoir (46) fließen kann.

2. Bremsanlage nach Anspruch 1,
**dadurch gekennzeichnet, daß**
- die Einlaßseite (58) der Hydraulikpumpe (54) mit der Auslaßseite (52) der Hydraulikpumpe (54) durch ein Druckbegrenzungsventil (62) hydraulisch verbunden ist.

3. Bremsanlage nach einem der vorhergehenden Ansprüche,
**dadurch gekennzeichnet, daß**
- eine Drucksensoranordnung (64) vorgesehen ist, die den auf die Druckkammer (32) des Hauptbremszylinders (12) wirkenden Fluiddruck erfaßt und ein für den momentanen Fluiddruck repräsentatives elektrisches Signal an die elektronische Steuereinheit (ECU) abgibt.

4. Bremsanlage nach einem der vorhergehenden Ansprüche,
**dadurch gekennzeichnet, daß**
- eine Sensoranordnung (68) vorgesehen ist, die eine Betätigung des Bremspedals (18) erfaßt und ein für diese Betätigung repräsentatives Signal an die elektronische Steuereinheit (ECU) abgibt.

## Claims

1. A braking system (10) comprising a master cylinder (12) having at least one cylinder/piston arrangement (14, 16) which is adapted to be actuated by a brake pedal (18) for supplying hydraulic fluid to at least one brake circuit (22, 24), comprising
- a controllable pressure source (54, 78, 90, 92) which, under the control of an electronic control unit ECU, subjects the piston (16) of the cylinder/piston arrangement (14, 16) to hydraulic fluid in the sense of supplying hydraulic fluid to the brake circuit (22, 24), wherein
- the controllable pressure source is a hydraulic pump (54) whose inlet side is hydraulically connected with a hydraulic fluid reservoir and whose outlet side (52) is hydraulically connected with a pressure reservoir (60) and a pressure chamber (32) arranged in the master cylinder (12), the volume change of which causes an actuation of the master cylinder (12), wherein
- the hydraulic pump is adapted to convey hydraulic fluid in one direction only,
**characterised in that**
- a pressure relief valve (70) which is adapted to be controlled by the electric control unit (ECU) is arranged between the outlet side (52) and the inlet side (58) of the hydraulic pump (54), with hydraulic fluid being able in at least one position of the pressure relief valve (70) to flow from the outlet side (52) to the hydraulic fluid reservoir (46) in the pressure relief phase.

2. The braking system according to Claim 1,
**characterised in that**
- the inlet side (58) of the hydraulic pump (54) is hydraulically connected with the outlet side (52) of the hydraulic pump (54) via a pressure limiting valve (62).

3. The braking system according to one of the preceding claims, **characterised in that**
- a pressure sensor arrangement (64) is provided which senses the fluid pressure acting on the pressure chamber (32) of the master cylinder (12) and which outputs an electrical signal representative of the current fluid pressure to the electronic control unit (ECU).

4. The braking system according to one of the preceding claims, **characterized in that**
- a sensor arrangement (68) is provided which senses an actuation of the brake pedal (18) and which outputs an electrical signal representative of said actuation to the electronic control unit (ECU).

## Revendications

1. Installation de freinage (10) comportant un cylindre principal de frein (12) qui présente au moins un ensemble piston-cylindre (14, 16) qui peut être actionnée par une pédale de frein (18) pour envoyer du fluide hydraulique à au moins un circuit de freinage (22, 24), cette installation comportant également:
- une source de pression commandable, qui, est commandée par une unité de commande électronique ECU et qui alimente en fluide hydraulique le piston (16) de l'ensemble piston-cylindre (14, 16) en vue de l'envoi de fluide hydraulique au circuit de freinage (22, 24),
- la source de pression commandable étant une pompe hydraulique (54), dont le côté d'aspiration est relié hydrauliquement à un réservoir de fluide hydraulique, et dont le côté de refoulement (52) est relié hydrauliquement à un réservoir sous pression (60) et à une chambre de pression (32), qui est disposée dans le cylindre principal de frein (12) et dont la modification de volume provoque l'actionnement du cylindre principal de frein (12),
- la pompe hydraulique étant prévue pour ne délivrer du fluide hydraulique que dans une seule direction,
**caractérisée en ce que**
- une soupape de décharge de la pression (70), commandable par l'unité de commande électrique (ECU), est disposée entre le côté de refoulement (52) et le côté d'aspiration (58) de la pompe hydraulique (54), tandis que dans la phase d'abaissement de la pression, dans au moins une position de la soupape de décharge de la pression (70), du fluide hydraulique peut s'écouler du côté de refoulement (52) vers le réservoir de fluide hydraulique (46).

2. Installation de freinage suivant la revendication 1, **caractérisée en ce que**
- le côté d'aspiration (58) de la pompe hydraulique (54) est reliée hydrauliquement au côté de refoulement (52) de la pompe hydraulique (54) par une soupape de limitation de la pression (62).

3. Installation de freinage suivant l'une des revendications précédentes, **caractérisée en ce que**
- un dispositif de détecteur de la pression (64) est prévu, qui mesure la pression du fluide agissant sur la chambre de pression (32) du cylindre principal de frein (12) et émet, vers l'unité électronique de commande (ECU), un signal électrique représentatif de la pression instantanée du fluide.

4. Installation de freinage suivant l'une des revendications précédentes, **caractérisée en ce que**
- un dispositif de détecteur (68) est prévu, qui détecte un actionnement de la pédale de frein (18) et émet, vers l'unité électronique de commande (ECU), un signal représentatif de cet actionnement.
